(19) Europäisches Patentamt
European Patent Office
Office européen des brevets

(11) **EP 4 678 694 A1**

(12) **EUROPEAN PATENT APPLICATION**
published in accordance with Art. 153(4) EPC

(43) Date of publication:
**14.01.2026 Bulletin 2026/03**

(21) Application number: **24767058.1**

(22) Date of filing: **01.03.2024**

(51) International Patent Classification (IPC):
**C08L 23/22** (2025.01)    **C08K 3/22** (2006.01)
**C08L 23/26** (2025.01)    **C08L 53/00** (2006.01)

(52) Cooperative Patent Classification (CPC):
**C08K 3/22; C08L 23/22; C08L 23/26; C08L 53/00**

(86) International application number:
**PCT/JP2024/007778**

(87) International publication number:
**WO 2024/185690 (12.09.2024 Gazette 2024/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.03.2023 JP 2023033083**

(71) Applicant: **Ajinomoto Co., Inc.**
**Tokyo 104-8315 (JP)**

(72) Inventors:
• **OKUNO, Manami**
**Kawasaki-shi, Kanagawa 210-0801 (JP)**
• **OHASHI, Satoru**
**Kawasaki-shi, Kanagawa 210-0801 (JP)**

(74) Representative: **Mewburn Ellis LLP**
**Aurora Building**
**Counterslip**
**Bristol BS1 6BX (GB)**

(54) **RESIN COMPOSITION AND METHOD FOR PRODUCING SAME, AND RESIN SHEET**

(57)    Provision of a resin composition capable of forming a resin composition layer that has simultaneously achieved both water vapor penetration barrier property and transparency. A resin composition containing the following component (A) to component (D): (A) a polymer having an acid anhydride group and/or a carboxy group, and a number average molecular weight of 10,000 or more, (B) a polymer having an acid anhydride group and/or a carboxy group, and a number average molecular weight of less than 10,000, (C) an isobutylene-containing polymer having a number average molecular weight of 10,000 or more, and (D) calcium oxide having a median size of 300 nm or less.

**EP 4 678 694 A1**

**Description**

[Technical Field]

The present invention relates to a resin composition useful for sealing electronic devices and the like and a production method thereof, and a resin sheet having a laminate structure containing a resin composition layer formed from the resin composition.

[Background Art]

For devices that are sensitive to moisture, such as OLED (organic light-emitting diode), organic solar cell, and the like, sealing materials are required to have high transparency in order to improve design and performance. For example, Patent Literature 1 proposes a sealing resin composition that uses hydrotalcite as a moisture absorbent material. However, there is a problem that moisture is reversibly absorbed into the resin composition during the production steps and distribution process, and devices such as OLED and the like are deteriorated unless a pre-drying treatment is performed.

[Citation List]

[Patent Literature]

[Patent Literature 1]
WO 2017/057708

[Summary of Invention]

[Technical Problem]

On the other hand, calcium oxide is known as a hygroscopic filler. A sealing layer formed from a sealing composition obtained by using calcium oxide is superior in the property of suppressing the penetration of water vapor (sometimes referred to as "water vapor penetration barrier property" in the present specification). However, when calcium oxide is added as a hygroscopic filler to a sealing composition containing an olefin-based polymer, the transparency of the sealing layer formed from the composition is generally lost. In order to suppress the decrease in transparency, use of fine calcium oxide may be considered, but suppression of the decrease in transparency and yellowing caused by calcium oxide is demanded.

The present invention has been made noting the above-mentioned circumstances, and aims to provide a resin composition capable of forming a resin composition layer (sealing layer) that has simultaneously achieved both water vapor penetration barrier property and transparency.

[Solution to Problem]

The present inventors have conducted intensive studies in an attempt to solve the above-mentioned problems and found that a resin composition capable of forming a resin composition layer (sealing layer) that has simultaneously achieved both water vapor penetration barrier property and transparency can be obtained by adding the following component (A) to component (D), which resulted in the completion of the present invention.

That is, the present invention has the following characteristics.

[1] A resin composition comprising the following component (A) to component (D) :

(A) a polymer having an acid anhydride group and/or a carboxy group, and a number average molecular weight of 10,000 or more,
(B) a polymer having an acid anhydride group and/or a carboxy group, and a number average molecular weight of less than 10,000,
(C) an isobutylene-containing polymer having a number average molecular weight of 10,000 or more, and
(D) calcium oxide having a median size of 300 nm or less.

[2] The resin composition of [1], wherein
the (A) polymer having an acid anhydride group and/or a carboxy group, and a number average molecular weight of 10,000 or more is an olefin-based polymer having an acid anhydride group and/or a carboxy group, and a number average molecular weight of 10,000 or more.

[3] The resin composition of [1] or [2], wherein
the (B) polymer having an acid anhydride group and/or a carboxy group, and a number average molecular weight of less than 10,000 is an olefin-based polymer having an acid anhydride group and/or a carboxy group, and a number average molecular weight of less than 10,000.

[4] The resin composition of any of [1] to [3], wherein the number average molecular weight of the component (B) is less than 3,000.

[5] The resin composition of any of [1] to [4], wherein the (C) isobutylene-containing polymer having a number average molecular weight of 10,000 or more is an isobutylene-containing olefin-based polymer having a number average molecular weight of 10,000 or more.

[6] The resin composition of [5], wherein the (C) isobutylene-containing polymer having a number average molecular weight of 10,000 or more is at least one selected from the group consisting of polyisobutylene, an isobutylene-isoprene copolymer, and a styrene-isobutylene-styrene block copolymer, each having a number average molecular weight of 10,000 or more.

[7] The resin composition of any of [1] to [6], further comprising (E) a liquid olefin-based polymer (excluding component (A), component (B), and component (C)).

[8] The resin composition of any of [1] to [7], further comprising (F) a tackifier.

[9] The resin composition of any of [1] to [8], wherein a content of the component (A) is 0.1 to 25% by mass relative to 100% by mass of a non-volatile content of the resin composition.

[10] The resin composition of any of [1] to [9], wherein the content of the component (B) is 3 to 50% by mass relative to 100% by mass of the non-volatile content of the resin composition.

[11] The resin composition of any of [1] to [10], wherein the content of the component (C) is 5 to 30% by mass relative to 100% by mass of the non-volatile content of the resin composition.

[12] The resin composition of any of [1] to [11], wherein the content of the component (D) is 10 to 70% by mass relative to 100% by mass of the non-volatile content of the resin composition.

[13] A resin sheet having a laminate structure including a resin composition layer formed from the resin composition of any of [1] to [12].

[Advantageous Effects of Invention]

According to the present invention, a resin composition capable of forming a resin composition layer (sealing layer) that has simultaneously achieved both water vapor penetration barrier property and transparency can be provided.

[Description of Embodiments]

The present invention is described below based on preferred embodiments thereof.

[Resin composition]

The resin composition of the present invention contains the following component (A) to component (D) as essential components:

(A) a polymer having an acid anhydride group and/or a carboxy group, and a number average molecular weight of 10,000 or more,
(B) a polymer having an acid anhydride group and/or a carboxy group, and a number average molecular weight of less than 10,000,
(C) an isobutylene-containing polymer having a number average molecular weight of 10,000 or more, and
(D) calcium oxide having a median size of 300 nm or less.

A resin composition layer superior in water vapor penetration barrier property can be formed using, as a hygroscopic filler, calcium oxide with high hygroscopicity than the hydrotalcite described in Patent Literature 1.

The use of calcium oxide reduces the transparency of the obtained resin composition layer. In the present invention, the use of calcium oxide (component (D)) having a median diameter of 300 nm or less can suppress the reduction in transparency.

It is difficult to disperse the fine component (D) well in the resin composition. However, in the present invention, the dispersibility of fine component (D) in the resin composition is improved by using a polymer having an acid anhydride group and/or a carboxy group, and a number average molecular weight of less than 10,000 (component (B)). In this respect, it is assumed that component (B) functions as a dispersing agent for the fine component (D). However, the present invention is not limited by such assumption.

In the present specification, the "olefin-based polymer" means a polymer in which a constitutional unit derived from olefin (hereinafter sometimes to be abbreviated to as "olefin unit") is the main constitutional unit (that is, the amount of olefin unit is the largest of all constitutional units). In the following, the "constitutional unit derived from butene" which is an olefin unit is sometimes abbreviated as "butene unit".

The olefin-based polymer may be an olefin-based resin (e.g., propylene-butene copolymer), or an olefin-based rubber (e.g., butyl rubber, i.e., isobutylene-isoprene copolymer). In the present specification, the "olefin-based resin" means an olefin-based polymer that cannot be crosslinked to form a rubber elastomer, and "olefin-based rubber" means an olefin-based polymer that can be crosslinked to form a rubber elastomer.

As the olefin, a monoolefin having one olefinic carbon-carbon double bond and/or a diolefin having two olefinic carbon-carbon double bonds are/is preferred. Examples of the monoolefin include $\alpha$-olefins such as ethylene, propylene, 1-butene, isobutylene, 1-pentene, 1-hexene, 1-heptene, 1-octene, and the like. Examples of the diolefin include 1,3-butadiene, isoprene, 1,3-pentadiene, 2,3-dimethylbutadiene, and the like.

The olefin-based polymer may be a homopolymer or a copolymer. The copolymer may be a random copolymer or a block copolymer. The olefin-based polymer may be a copolymer of olefin and a monomer other than olefin. Examples of the olefin-based copolymer include ethylene-nonconjugated diene copolymer, ethylene-propylene copolymer, ethylene-propylene-nonconjugated diene copolymer, ethylene-butene copolymer, ethylene-propylene-butene copolymer, propylene-butene copolymer, propylene-butene-nonconjugated diene copolymer, isobutylene-isoprene copolymer, styrene-isobutylene copolymer, styrene-isobutylene-styrene copolymer, and the like.

Each component is described in detail below. Unless otherwise stated in the present specification, only one kind of each component may be used, or two or more kinds thereof may be used in combination.

<Component (A)>

Component (A) is a polymer having an acid anhydride group (i.e., carbonyloxycarbonyl group (-CO-O-CO-)) and/or a carboxy group, and a number average molecular weight of 10,000 or more. By adding component (A), a resin composition layer that is resistant to deformation and can maintain the shape can be obtained. Without addition of component (A), film formation becomes difficult. In addition, component (A) undergoes a crosslinking reaction of acid anhydride group/carboxy group to form a crosslinked structure, or coordinates acid anhydride group/carboxy group with calcium oxide to form a crosslinked structure, whereby calcium oxide (component (D)) can be dispersed well in the resin composition, and water vapor penetration barrier property can be exhibited. The polymer for component (A) is not particularly limited as long as it has a number average molecular weight of 10,000 or more, and an acid anhydride group and/or a carboxy group. From the aspect of compatibility, an olefin-based polymer having an acid anhydride group and/or a carboxy group, and a number average molecular weight of 10,000 or more is preferred.

When an olefin-based polymer having an acid anhydride group and a number average molecular weight of 10,000 or more is used as component (A), the concentration of acid anhydride group in the polymer is preferably 0.05 to 10 mmol/g, more preferably 0.10 to 5 mmol/g. The concentration of the acid anhydride group is obtained from the acid value defined as the number of milligram of potassium hydroxide necessary for neutralizing the acid present in 1 g of a polymer according to the description of JIS K 2501.

When an olefin-based polymer having a carboxy group and a number average molecular weight of 10,000 or more is used as component (A), the concentration of carboxy group in the polymer is preferably 0.05 to 20 mmol/g, more preferably 0.10 to 10 mmol/g. The concentration of the carboxy group is obtained from the acid value defined as the number of milligram of potassium hydroxide necessary for neutralizing the acid present in 1 g of a polymer according to the description of JIS K 2501.

When an olefin-based polymer having an acid anhydride group and a carboxy group, and a number average molecular weight of 10,000 or more is used as component (A), a total of the concentration of the acid anhydride group and the concentration of the carboxy group in the polymer is preferably 0.05 to 20 mmol/g, more preferably 0.10 to 10 mmol/g.

Component (A) can be produced, for example, by (i) graft modification of an olefin-based polymer with an unsaturated compound having an acid anhydride group and/or a carboxy group (e.g., maleic anhydride) under radical reaction conditions, or (ii) copolymerization of an unsaturated compound having an acid anhydride group and/or a carboxy group and $\alpha$-olefin.

As component (A), for example, polymers available from SEIKO PMC CORPORATION and the like can be used. Examples of such polymer include "ER645" (maleic anhydride-butyl methacrylate random copolymer-modified propylene-butene random copolymer) manufactured by SEIKO PMC CORPORATION, "ER661" (maleic anhydride-butyl methacrylate random copolymer-modified butyl rubber) manufactured by SEIKO PMC CORPORATION, "ER641" (maleic anhydride-modified butyl rubber) manufactured by SEIKO PMC CORPORATION, "ER669" (maleic anhydride-2-ethylhexyl acrylate random copolymer-modified butyl rubber) manufactured by SEIKO PMC CORPORATION, "ER674" (maleic anhydride-lauryl methacrylate random copolymer-modified butyl rubber) manufactured by SEIKO PMC CORPORATION, "T-YP279" (maleic anhydride-modified propylene-butene random copolymer) manufactured by SEIKO PMC CORPORATION, "T-YP212" (maleic anhydride-modified propylene-butene random copolymer) manufactured by SEIKO PMC CORPORATION, and the like.

In one embodiment of the present invention, component (A) has a number average molecular weight of 10,000 or more, and is

(i) preferably at least one selected from the group consisting of polybutene having an acid anhydride group and/or a carboxy group, an isobutylene-isoprene copolymer (i.e., butyl rubber) having an acid anhydride group and/or a carboxy group, a propylene-butene copolymer having an acid anhydride group and/or a carboxy group, an ethylene-methyl methacrylate copolymer having an acid anhydride group and/or a carboxy group, and an ethylene-propylene-butene copolymer having an acid anhydride group and/or a carboxy group,

(ii) more preferably at least one selected from the group consisting of polybutene having an acid anhydride group and/or a carboxy group, an isobutylene-isoprene copolymer having an acid anhydride group and/or a carboxy group, and a propylene-butene copolymer having an acid anhydride group and/or a carboxy group,

(iii) further preferably at least one selected from the group consisting of polybutene having an acid anhydride group, an isobutylene-isoprene copolymer having an acid anhydride group, and a propylene-butene copolymer having an acid anhydride group,

(iv) particularly preferably polybutene having an acid anhydride group.

The number average molecular weight of component (A) is 10,000 or more and, from the aspects of improving the good coatability of the resin composition varnish and the sealing performance and mechanical strength of the resin composition layer to be formed, and the like, preferably 10,000 to 500,000, more preferably 15,000 to 400,000. The number average molecular weight of each component is measured by a gel permeation chromatography (GPC) method (based on polystyrene). Specifically, the number average molecular weight by the GPC method can be measured using "LC-9A/RID-6A" manufactured by Shimadzu Corporation as a measuring apparatus, "Shodex K-800P/K-804L/K-804L" manufactured by Showa Denko K.K. as a column, and toluene or the like as a mobile phase at a column temperature of 40°C, and calculated using a standard polystyrene calibration curve.

The content of component (A) is preferably 0.1 to 25% by mass, more preferably 1 to 20% by mass, further preferably 3 to 15% by mass, relative to 100% by mass of the non-volatile content of the resin composition, from the aspects of forming a resin composition layer that is resistant to deformation and can maintain the shape.

<Component (B)>

Component (B) is a polymer having an acid anhydride group and/or a carboxy group, and a number average molecular weight of less than 10,000. By adding component (B), calcium oxide (component (D)) can be dispersed well in the resin composition. In addition, the acid anhydride group/carboxy group undergoes a crosslinking reaction or coordinates with calcium oxide to form a crosslinked structure, which can provide water vapor penetration barrier property. Component (B) is preferably an olefin-based polymer having an acid anhydride group and/or a carboxy group, and a number average molecular weight of less than 10,000, more preferably an olefin-based polymer having an acid anhydride group and a number average molecular weight of less than 10,000.

When an olefin-based polymer having an acid anhydride group and a number average molecular weight of less than 10,000 is used as component (B), the concentration of the acid anhydride group in the polymer is preferably 0.05 to 10 mmol/g, more preferably 0.10 to 5 mmol/g. The concentration of the acid anhydride group is obtained from the acid value defined as the number of milligram of potassium hydroxide necessary for neutralizing the acid present in 1 g of a polymer according to the description of JIS K 2501.

When an olefin-based polymer having a carboxy group and a number average molecular weight of less than 10,000 is used as component (B), the concentration of the carboxy group in the polymer is preferably 0.05 to 20 mmol/g, more preferably 0.10 to 10 mmol/g. The concentration of the carboxy group is obtained from the acid value defined as the number of milligram of potassium hydroxide necessary for neutralizing the acid present in 1 g of a polymer according to the description of JIS K 2501.

When an olefin-based polymer having an acid anhydride group and a carboxy group, and a number average molecular weight of less than 10,000 is used as component (B), a total of the concentration of the acid anhydride group and the concentration of the carboxy group in the polymer is preferably 0.05 to 20 mmol/g, more preferably 0.10 to 10 mmol/g.

The number average molecular weight of component (B) is less than 10,000, and preferably less than 3,000 from the aspect of the dispersibility of the hygroscopic filler (calcium oxide:component (D)). In addition, in one embodiment of the present invention, the number average molecular weight of component (B) is preferably 100 to 10,000 (excluding 10,000), more preferably 250 to 9,000, further preferably 500 to 8,000, from the aspects of improving the good coatability of the resin composition varnish and the sealing performance and mechanical strength of the resin composition layer to be formed, and the like.

Component (B) can be produced, for example, by (i) graft modification of an olefin-based polymer with an unsaturated compound having an acid anhydride group and/or a carboxy group (e.g., maleic anhydride) under radical reaction conditions, or (ii) copolymerization of an unsaturated compound having an acid anhydride group and/or a carboxy group and α-olefin.

As the component (B), polymers available from TOHO CHEMICAL INDUSTRY COMPANY, LIMITED, SEIKO PMC CORPORATION, and the like can be used. Examples of such polymer include "HV-300M" (maleic anhydride-modified liquid polybutene) manufactured by TOHO CHEMICAL INDUSTRY COMPANY, LIMITED, "HV-100M" (maleic anhydride-modified liquid polybutene) manufactured by TOHO CHEMICAL INDUSTRY COMPANY, LIMITED, "ER688" (maleic anhydride-modified liquid polybutene) manufactured by SEIKO PMC CORPORATION, "LUCANT A-5515" (acid-modified ethylene-α-olefin copolymer) manufactured by Mitsui Chemicals, Inc., "LUCANT A-5260" (acid-modified ethylene-α-olefin copolymer) manufactured by Mitsui Chemicals, Inc., "LUCANT A-5320H" (acid-modified ethylene-α-olefin copolymer) manufactured by Mitsui Chemicals, Inc., "T-YP430" (maleic anhydride-modified ethylene-methyl methacrylate copolymer) manufactured by SEIKO PMC CORPORATION, "T-YP956" (maleic anhydride-modified ethylene-propylene-butene random copolymer) manufactured by SEIKO PMC CORPORATION, "DIACARNA 30M" (copolymer of maleic anhydride and α-olefin) manufactured by Mitsubishi Chemical Corporation, and the like.

In one embodiment of the present invention, component (B) has a number average molecular weight of less than 10,000 and is

(i) preferably at least one selected from the group consisting of polybutene having an acid anhydride group and/or a carboxy group, an isobutylene-isoprene copolymer (i.e., butyl rubber) having an acid anhydride group and/or a carboxy group, a propylene-butene copolymer having an acid anhydride group and/or a carboxy group, an ethylene-methyl methacrylate copolymer having an acid anhydride group and/or a carboxy group, and an ethylene-propylene-butene copolymer having an acid anhydride group and/or a carboxy group,
(ii) more preferably at least one selected from the group consisting of polybutene having an acid anhydride group and/or a carboxy group, an isobutylene-isoprene copolymer having an acid anhydride group and/or a carboxy group, and a propylene-butene copolymer having an acid anhydride group and/or a carboxy group,
(iii) further preferably at least one selected from the group consisting of polybutene having an acid anhydride group, an isobutylene-isoprene copolymer having an acid anhydride group, and a propylene-butene copolymer having an acid anhydride group, or
(iv) particularly preferably polybutene having an acid anhydride group.

The content of component (B) is preferably 3 to 50% by mass, more preferably 5 to 45% by mass, further preferably 10 to 40% by mass, relative to 100% by mass of the non-volatile content of the resin composition, from the aspect of dispersibility and the like of fine calcium oxide (component (D)) in the resin composition.

<Component (C)>

Component (C) is an isobutylene-containing polymer having a number average molecular weight of 10,000 or more, and does not contain component (A). That is, component (C) is an isobutylene-containing polymer having a number average molecular weight of 10,000 or more, and not containing an acid anhydride group or a carboxy group. In the present specification, the "isobutylene-containing polymer" refers to a polymer containing a constitutional unit derived from isobutylene. By adding component (C), the yellowing of the resin composition layer to be formed can be suppressed. Component (C) is preferably an isobutylene-containing olefin-based polymer having a number average molecular weight of 10,000 or more.

As component (C), for example, polymers available from JSR and the like can be used. Examples of such polymer include "BUTYL065", "BUTYL268", and "BUTYL365" (all butyl rubbers) manufactured by JSR, "HIMOL", "TETRAX" (all polyisobutylene) manufactured by JXTG Energy, "B10", "B15", "N50SF", and "N80SF" (all polyisobutylene) manufactured by BASF, "SIBSTAR103T-UL" (styrene-isobutylene-styrene block copolymer) manufactured by KANEKA CORPORATION, and the like.

Component (C) has a number average molecular weight of 10,000 or more, and is

(i) preferably at least one selected from the group consisting of polyisobutylene, an isobutylene-isoprene copolymer (i.e., butyl rubber), and a styrene-isobutylene-styrene block copolymer,
(ii) more preferably an isobutylene-isoprene copolymer.

When an isobutylene-isoprene copolymer (i.e., butyl rubber) having a number average molecular weight of 10,000 or more is used as component (C), the amount of the isobutylene unit in the copolymer is preferably 1 to 50% by mass, more preferably 2 to 45% by mass, further preferably 3 to 40% by mass, relative to the total of the isobutylene unit and the isoprene unit, from the aspect of yellowing resistance of the resin composition layer to be formed and the like.

When a styrene-isobutylene-styrene block copolymer having a number average molecular weight of 10,000 or more is used as component (C), the amount of the isobutylene unit in the copolymer is preferably 1 to 50% by mass, more preferably 2 to 45% by mass, further preferably 3 to 40% by mass, relative to the total of the isobutylene unit and the styrene unit, from the aspect of yellowing resistance of the resin composition layer to be formed and the like.

The number average molecular weight of component (C) is 10,000 or more, and is preferably 10,000 to 500,000, more preferably 15,000 to 400,000, from the aspect of yellowing resistance of the resin composition layer to be formed and the like.

The content of component (C) is preferably 5 to 30% by mass, more preferably 7 to 25% by mass, further preferably 9 to 20% by mass, relative to 100% by mass of the non-volatile content of the resin composition, from the aspect of yellowing resistance of the resin composition layer to be formed and the like.

<Component (D)>

Component (D) is calcium oxide having a median size of 300 nm or less. By adding component (D) as a hygroscopic filler, water vapor penetration barrier property can be imparted to the resin composition layer to be formed. In addition, by setting the median size to 300 nm or less, a resin composition layer with high transparency can be formed.

The median size of component (D) is 300 nm or less, is preferably 250 nm or less from the aspect of the transparency of the resin composition layer to be formed, and is preferably 1 nm or more, more preferably 5 nm or more, further preferably 10 nm or more, from the aspect of the dispersibility of component (D) in the resin composition. In one embodiment of the present invention, the median size of component (D) is preferably 1 to 300 nm, more preferably 5 to 250 nm, further preferably 10 to 200 nm. The median size of component (D) is the median size of a volume-based particle size distribution created based on measurements of the particle size of component (D) using dynamic light scattering (JIS Z 8828). Dynamic light scattering is a method for calculating particle size and particle size distribution by analyzing, using photon correlation analysis, fluctuations corresponding to the speed of Brownian motion, from scattered light observed when laser beam is irradiated on particles in a dispersion medium. Specifically, this median size can be measured and calculated as described in the Examples.

As component (D), calcium oxide with a median size exceeding 300 nm may be pulverized and used, and a commercially available product of calcium oxide with a median size of 300 nm or less may be used. Examples of the commercially available product of calcium oxide with a median size exceeding 300 nm include "QC-X" manufactured by Inoue Calcium Corporation, "WAC series" manufactured by Sankyo Seifun Corporation, "HAL-G", "HAL-J" , "HAL-F", "HAL-O", and "HAL-P" manufactured by Yoshizawa Lime Industry Co., Ltd., and the like. Examples of the commercially available product of calcium oxide with a median size of 300 nm or less include "CaO Nano Powder" manufactured by Filgen, and the like.

The content of component (D) is preferably 5% by mass or more, more preferably 10% by mass or more, further preferably 15% by mass or more, relative to 100% by mass of the non-volatile content of the resin composition, from the aspect of water vapor penetration barrier property of the resin composition layer. From the aspect of adhesiveness of the resin composition layer, it is preferably 80% by mass or less, more preferably 75% by mass or less, further preferably 70% by mass or less. In one embodiment of the present invention, the content of component (D) is preferably 5 to 80% by mass, more preferably 10 to 70% by mass, further preferably 15 to 60% by mass, relative to 100% by mass of the non-volatile content of the resin composition.

<Other component>

The resin composition of the present invention may contain a component different from the component (A) to component (D) (hereinafter sometimes to be referred to as "other component") as long as the effect of the present invention is not inhibited. Examples of other component include liquid olefin-based polymer, tackifier, antioxidant, curing accelerator, epoxy-modified olefin-based polymer having a number average molecular weight of less than 10,000, plasticizer, and the like. Only one kind of each of these may be used or two or more kinds thereof may be used in combination.

(Liquid olefin-based polymer (hereinafter also to be referred to as "component (E)"))

Component (E) is a liquid olefin-based polymer excluding component (A), component (B), and component (C). By adding component (E), good adhesiveness and flexibility can be imparted to the resin composition layer to be formed.

In the present invention, the "liquid" in the "liquid olefin-based polymer" means that the viscosity at 25°C is not more than 5,000 Pa·s. In the present invention, "the viscosity at 25°C" means a viscosity calculated by multiplying the kinematic viscosity at 25°C, measured by a dynamic viscoelasticity measuring device, by the density. Examples of the dynamic viscoelasticity measuring device include a rheometer (trade name: DISCOVERY HR-2) manufactured by TA Instruments and the like.

In the present invention, a liquid olefin-based polymer having an acid anhydride group and/or a carboxy group, and a number average molecular weight of 10,000 or more is classified as component (A), a liquid olefin-based polymer having an acid anhydride group and/or a carboxy group, and a number average molecular weight of less than 10,000 is classified as component (B), and a liquid isobutylene containing olefin-based polymer having a number average molecular weight of 10,000 or more is classified as component (C). Thus, the component (E) in the present invention is a liquid olefin-based polymer other than component (A) to component (C).

The viscosity of component (E) at 25°C is preferably 5 to 5,000Pa·s, more preferably 10 to 4,000Pa·s, further preferably 20 to 3,000Pa·s, from the aspects of good adhesiveness and flexibility of the resin composition layer to be formed.

The number average molecular weight of component (E) is preferably 100 to 50,000, more preferably 200 to 30,000, further preferably 300 to 20,000, from the aspect of good coatability of the resin composition varnish, and the like.

Component (E) may be a commercially available product. Examples of such commercially available product include "HV-100" (liquid polybutene) manufactured by ENEOS, "HV-300" (liquid polybutene) manufactured by ENEOS, "HV-1900" (liquid polybutene) manufactured by ENEOS, "HV-50" (liquid polybutene) manufactured by ENEOS, "HV-35" (liquid polybutene) manufactured by ENEOS, "950MW" (liquid polybutene) manufactured by Kothari, "2400MW" (liquid olefin-based polymer) manufactured by Kothari, "H-1900" (liquid polybutene) manufactured by INEOS, "H-6000" (liquid polybutene) manufactured by INEOS, "H-18000" (liquid polybutene) manufactured by INEOS, "200N" (liquid polybutene) manufactured by NOF CORPORATION, "BI-2000" (hydrogenated polybutadiene) manufactured by Nippon Soda Co., Ltd., "BI-3000" (hydrogenated polybutadiene) manufactured by Nippon Soda Co., Ltd., "GI-3000" (hydrogenated polybutadiene) manufactured by Nippon Soda Co., Ltd., "LUCANT LX100" (liquid olefin-based polymer) manufactured by Mitsui Chemicals, Inc., "LUCANT LX400" (liquid olefin-based polymer) manufactured by Mitsui Chemicals, Inc., "Poly bd R-45HT" (liquid butadiene-based rubber) manufactured by Idemitsu Showa Shell, "Poly bd R-15HT" (liquid butadiene-based rubber) manufactured by Idemitsu Showa Shell, "Poly ip" (liquid polyisoprene) manufactured by Idemitsu Showa Shell, "B-1000" (liquid polybutadiene) manufactured by Nippon Soda Co., Ltd., "B-3000" (liquid polybutadiene) manufactured by Nippon Soda Co., Ltd., "G-3000" (liquid polybutadiene) manufactured by Nippon Soda Co., Ltd., "LIR-30" (liquid polyisoprene) manufactured by KURARAY CO., LTD., "LIR-390" (liquid polyisoprene) manufactured by KURARAY CO., LTD., "LIR-290" (liquid polyisoprene) manufactured by KURARAY CO., LTD., "LBR-302" (liquid polybutadiene) manufactured by KURARAY CO., LTD., "LBR-305" (liquid polybutadiene) manufactured by KURARAY CO., LTD., "LBR-361" (liquid polybutadiene) manufactured by KURARAY CO., LTD., "L-SBR-820" (liquid styrene-butadiene random copolymer) manufactured by KURARAY CO., LTD., "Ricon154" (liquid butadiene) manufactured by CRAY VALLEY, "RICON 184" (liquid styrene-butadiene random copolymer) manufactured by CRAY VALLEY, and the like.

Component (E) is preferably liquid polybutene and/or hydrogenated polybutadiene, more preferably liquid polybutene.

When component (E) is used, the content thereof is preferably 3% by mass or more, more preferably 5% by mass or more, further preferably 10% by mass or more, preferably 50% by mass or less, more preferably 45% by mass or less, further preferably 40% by mass or less, relative to 100% by mass of the non-volatile content of the resin composition, from the aspects of good adhesiveness and flexibility of the resin composition layer to be formed. In one embodiment of the present invention, the content of component (E) is preferably 3 to 50% by mass, more preferably 5 to 40% by mass, further preferably 10 to 30% by mass, relative to 100% by mass of the non-volatile content of the resin composition.

(Tackifier (hereinafter also to be referred to as "component (F)"))

Tackifier is a component that imparts adhesiveness to a resin composition. Examples of the tackifier include rosin resin, terpene resin, modified terpene resin (hydrogenated terpene resin, terpene-phenol copolymer resin, aromatic-modified terpene resin, etc.), petroleum resin (aliphatic petroleum resin, hydrogenated petroleum resin, alicyclic petroleum resin, aromatic petroleum resin, copolymerized petroleum resin), coumarone-indene resin, alkylphenol resin, xylene resin, and the like.

Tackifier may be a commercially available product. Examples of the commercially available product thereof include the followings. Examples of the rosin resin include Pinecrystal ME-H, Pinecrystal ME-D, Pinecrystal ME-G, Pinecrystal KR-85, Pinecrystal KE-311, Pinecrystal KE-359, Pinecrystal D-6011, Pinecrystal PE-590, Pinecrystal KE-604, Pinecrystal PR-580 (all manufactured by Arakawa Chemical Industries, Ltd.), and the like.

Examples of the terpene resin include YS resin PX1000, YS resin PX1150, YS resin PX1150N, YS resin PX1250, YS resin TH130, YS resin TR105, YS resin LP, YS resin CP (all manufactured by YASUHARA CHEMICAL CO., LTD.), and the like.

Examples of the hydrogenated terpene resin include CLEARON P, CLEARON M, CLEARON K series (all manufactured by YASUHARA CHEMICAL CO., LTD.), and the like.

Examples of the terpene-phenol copolymer resin include YS Polystar 2000, Polystar U, Polystar T, Polystar S, Mighty Ace G (all manufactured by YASUHARA CHEMICAL CO., LTD.), and the like.

Examples of the aromatic-modified terpene resin include YS resin TO85, YS resin TO105, YS resin TO115, YS resin TO125 (all manufactured by YASUHARA CHEMICAL CO., LTD.), and the like.

Examples of the hydrogenated petroleum resin include Escorez 5300 series, 5600 series (all manufactured by Exxon Mobil); T-REZ OP501, T-REZ PR803, T-REZ HA085, T-REZ HA103, T-REZ HA105, T-REZ HA125 (all hydrogenated dicyclopentadiene-based petroleum resins, manufactured by ENEOS); Quintone1325, Quintone1345 (all manufactured by Zeon Corporation); I-MARV S-100, I-MARV S-110, I-MARV P-100, I-MARV P-125, I-MARV P-140 (all hydrogenated dicyclopentadiene-based petroleum resins, manufactured by Idemitsu Kosan Co., Ltd.); ARKON P-90, ARKON P-100, ARKON P-115, ARKON P-125, ARKON P-140, ARKON M-90, ARKON M-100, ARKON M-115, ARKON M-135, TFS13-030 (all manufactured by Arakawa Chemical Industries, Ltd.), and the like.

Examples of the aromatic petroleum resin include ENDEX155 (manufactured by Eastman); Neopolymer L-90, Neopolymer 120, Neopolymer 130, Neopolymer 140, Neopolymer 150, Neopolymer 170S, Neopolymer 160, Neopolymer E-100, Neopolymer E-130, Neopolymer M-1, Neopolymer S, Neopolymer S100, Neopolymer 120S, Neopolymer 130S, Neopolymer EP-140 (all manufactured by ENEOS); Petcol LX, Petcol 120, Petcol 130, Petcol 140 (all manufactured by Tosoh Corporation); T-REZ RB093, T-REZ RC100, T-REZ RC115, T-REZ RC093, T-REZ RE100 (all manufactured by ENEOS), and the like.

Examples of the copolymerized petroleum resin include T-REZ HB103, T-REZ HB125, TREZ PR801, T-REZ PR802, T-REZ RD104 (all manufactured by ENEOS); Petrotack 60, Petrotack 70, Petrotack 90, Petrotack 90HS, Petrotack 90V, Petrotack 100V (all manufactured by Tosoh Corporation); QuintoneD100 (manufactured by Zeon Corporation), and the like.

The softening point of the tackifier is preferably 50 to 200°C, more preferably 90 to 180°C, further preferably 100 to 170°C, from the aspect of heat resistance of the resin composition layer to be formed, and the like. The softening point is measured by the ring and ball method according to JIS K2207.

When a tackifier is used, the content thereof is preferably 1 to 50% by mass, more preferably 2 to 40% by mass, further preferably 5 to 30% by mass, relative to 100% by mass of the non-volatile content of the resin composition, from the aspects of the adhesiveness and sealing property of the resin composition layer to be formed.

(Antioxidant (hereinafter also to be referred to as "component (G)"))

In the present invention, antioxidants are not particularly limited and known ones can be used. For example, "Irganox 1010" (hindered phenol antioxidant) manufactured by BASF, and the like can be mentioned. When an antioxidant is used, the content thereof is preferably 0.01 to 5% by mass, more preferably 0.05 to 2.5% by mass, further preferably 0.10 to 2% by mass, relative to 100% by mass of the non-volatile content of the resin composition.

(Curing accelerator (hereinafter also to be referred to as "component (H)"))

In the present invention, a curing accelerator may be used in order to promote the crosslinking reaction of the acid anhydride group and/or the carboxy group of component (A) and component (B). Examples of the curing accelerator include imidazole compound, tertiary/quaternary amine compound, dimethylurea compound, organic phosphine compound, and the like.

Examples of the imidazole compound include 1H-imidazole, 2-methylimidazole, 2-phenyl-4-methylimidazole, 2-ethyl-4-methylimidazole, 1-cyanoethyl-2-ethyl-4-methylimidazole, 2-undecylimidazole, 1-cyanoethyl-2-undecylimidazole, 1-cyanoethyl-2-undecylimidazolium trimellitate, 2-phenyl-4,5-bis(hydroxymethyl)imidazole, 1-benzyl-2-methylimidazole, 1-benzyl-2-phenylimidazole, 2-phenylimidazole, 2-dodecylimidazole, 2-heptadecylimidazole, 1,2-dimethylimidazole, 2-phenyl-4-methyl-5-hydroxymethylimidazole, and the like. Specific examples of the imidazole compound include CUREZOL 2MZ, 2P4MZ, 2E4MZ, 2E4MZ-CN, C11Z, C11Z-CN, C11Z-CNS, C11Z-A, 2PHZ, 1B2MZ, 1B2PZ, 2PZ, C17Z, 1.2DMZ, 2P4MHZ-PW, 2MZ-A, and 2MA-OK (all manufactured by SHIKOKU CHEMICALS CORPORATION), and the like.

The tertiary/quaternary amine compound is not particularly limited. Examples thereof include quaternary ammonium salts such as tetramethylammonium bromide, tetrabutylammonium bromide, triethylmethylammonium-2-ethylhexanoic acid salt, and the like; diazabicyclo compounds such as DBU (1,8-diazabicyclo[5.4.0]undecene-7), DBN (1,5-diazabicyclo[4.3.0]nonene-5), DBU-phenol salt, DBU-octylic acid salt, DBU-p-toluenesulfonic acid salt, DBU-formic acid salt, DBU-phenolnovolac resin salt and the like; tertiary amines or salts thereof such as benzyldimethylamine, 2-(dimethylaminomethyl)phenol, 2,4,6-tris(dimethylaminomethyl)phenol (TAP) and the like; dimethylurea compounds such as aromatic dimethylurea, aliphatic dimethylurea, and the like; and the like.

Examples of the dimethylurea compound include aromatic dimethylureas such as DCMU (3-(3,4-dichlorophenyl)-1,1-dimethylurea), U-CAT 3512T (manufactured by San-Apro Ltd.), and the like; aliphatic dimethylureas such as U-CAT 3503N (manufactured by San-Apro Ltd.), and the like; and the like. Among these, aromatic dimethylurea is preferably used from the aspect of curability.

Examples of the organic phosphine compound include triphenyl phosphine, tetraphenylphosphonium tetra-p-tolylborate, tetraphenylphosphonium tetraphenylborate, tri-tert-butylphosphonium tetraphenylborate, (4-methylphenyl) triphenylphosphonium thiocyanate, tetraphenylphosphonium thiocyanate, butyltriphenylphosphonium thiocyanate, triphenylphosphine triphenylborane, and the like. Specific examples of the organic phosphine compound include TPP, TPP-MK, TPP-K, TTBuP-K, TPP-SCN, and TPP-S (all manufactured by HOKKO CHEMICAL INDUSTRY CO., LTD.), and the like.

When a curing accelerator is used, the content thereof is preferably 0.001 to 5% by mass, more preferably 0.001 to 2.5% by mass, further preferably 0.001 to 1% by mass, relative to 100% by mass of the non-volatile content of the resin composition, in order to promote the crosslinking reaction of the acid anhydride group and/or the carboxy group of component (A) and component (B) .

(Epoxy-modified olefin-based polymer having a number average molecular weight of less than 10,000)

The "epoxy-modified olefin-based polymer" means the same as the "olefin-based polymer having an epoxy group". The epoxy group of the epoxy-modified olefin-based polymer forms a crosslinked structure by reaction with acid anhydride group/carboxy group in the olefin-based polymer having an acid anhydride group and/or a carboxy group (component (A) and, in some cases, component (B)), by which the dispersibility of calcium oxide (component (D)) in the resin composition and the water vapor penetration barrier property of the obtained resin composition layer can be improved.

The concentration of the epoxy group in the epoxy-modified olefin-based polymer having a number average molecular weight of less than 10,000 is preferably 0.05 to 10 mmol/g, more preferably 0.10 to 5 mmol/g. The epoxy group concentration is determined from the epoxy equivalent obtained based on JIS K 7236-1995.

The number average molecular weight of the epoxy-modified olefin-based polymer having a number average molecular weight of less than 10,000 is preferably 100 to 10,000, more preferably 250 to 9,000, further preferably 500 to 8,000, from the aspects of improving the good coatability of the resin composition varnish and the sealing performance and mechanical strength of the resin composition layer to be formed, and the like.

An epoxy-modified olefin-based polymer having a number average molecular weight of less than 10,000 can be obtained, for example, by (i) graft modification of an olefin-based polymer with an unsaturated compound having an epoxy group (e.g., glycidyl (meth)acrylate, 4-hydroxybutyl acrylate glycidyl ether, allyl glycidyl ether) under radical reaction conditions, or (ii) copolymerization of an unsaturated compound having an epoxy group and $\alpha$-olefin.

The epoxy-modified olefin-based polymer having a number average molecular weight of less than 10,000 is

(i) preferably at least one selected from the group consisting of ethylene-glycidyl methacrylate copolymer, ethylene-glycidyl methacrylate-vinyl acetate copolymer, ethylene-glycidyl methacrylate-methyl acrylate copolymer, propylene-butene copolymer having an epoxy group, isobutylene-isoprene copolymer (i.e., butyl rubber) having an epoxy group, and ethylene-methyl methacrylate copolymer having an epoxy group,
(ii) more preferably at least one selected from the group consisting of propylene-butene copolymer having an epoxy group, isobutylene-isoprene copolymer having an epoxy group, and ethylene-methyl methacrylate copolymer having an epoxy group,
(iii) further preferably propylene-butene copolymer having an epoxy group and/or isobutylene-isoprene copolymer having an epoxy group,
(iv) particularly preferably propylene-butene copolymer having an epoxy group, or isobutylene-isoprene copolymer having an epoxy group, each having a number average molecular weight of less than 10,000.

When a propylene-butene copolymer having an epoxy group and a number average molecular weight of less than 10,000 is used as the epoxy-modified olefin-based polymer having a number average molecular weight of less than 10,000, the amount of the butene unit in the copolymer is preferably 1 to 50% by mass, more preferably 2 to 45% by mass, further preferably 3 to 40% by mass, based on the total amount of the propylene unit and the butene unit. The amount of the aforementioned butene units is based on the propylene unit and butene unit excluding modified portions (for example, portion derived from glycidyl (meth)acrylate for introducing epoxy group).

When an isobutylene-isoprene copolymer (i.e., butyl rubber) having an epoxy group and a number average molecular weight of less than 10,000 is used as the epoxy-modified olefin-based polymer having a number average molecular weight of less than 10,000, the amount of the isoprene unit in the copolymer is preferably 0.1 to 20% by mass, more preferably 0.3 to 15% by mass, further preferably 0.5 to 10% by mass, based on the total amount of the isobutylene unit and the isoprene unit, from the aspects of yellowing resistance of the resin composition layer and the like. The amount of the aforementioned isoprene unit is based on the isobutylene unit and isoprene unit excluding modified portions (for example, portion derived from glycidyl (meth)acrylate for introducing epoxy group).

When an epoxy-modified olefin-based polymer having a number average molecular weight of less than 10,000 is used, the content thereof is preferably 3 to 50% by mass, more preferably 5 to 45% by mass, further preferably 10 to 40% by mass, relative to 100% by mass of the non-volatile content of the resin composition, from the aspects of improving the good coatability of the resin composition varnish and the sealing performance and mechanical strength of the resin composition layer to be formed, and the like.

(Plasticizer)

Examples of the plasticizer include mineral oils such as paraffin-based process oil, naphthene-based process oil, liquid paraffin, vaseline, and the like, vegetable oils such as castor oil, cottonseed oil, rapeseed oil, soybean oil, palm oil, coconut oil, olive oil, and the like, and the like.

When a plasticizer is used, the content thereof is preferably 2 to 30% by mass, more preferably 4 to 25% by mass, further preferably 5 to 20% by mass, relative to 100% by mass of the non-volatile content of the resin composition, from the aspect of flexibility of the resin composition layer to be formed.

[Production method of resin composition]

A preferable method for producing the resin composition of the present invention is described below. However, the resin composition of the present invention may also be produced by methods other than the following method.

A preferable production method of the resin composition of the present invention (hereinafter sometimes to be referred to as "the production method of the present invention") includes a step of pulverization treatment of a mixture of a polymer having an acid anhydride group and/or a carboxy group, and a number average molecular weight of 10,000 or more (i.e., component (A)), a polymer having an acid anhydride group and/or a carboxy group, and a number average molecular weight of less than 10,000 (i.e., component (B)), an isobutylene-containing polymer having a number average molecular weight of 10,000 or more (i.e., component (C)) and/or calcium oxide with a median size exceeding 300 nm, and an organic solvent. The resin composition of the present invention can also be produced by mixing calcium oxide having a median size of 300 nm or less (i.e., component (D)) with components other than component (D). However, such simple mixing makes it more difficult to disperse fine calcium oxide well in the resin composition than when the aforementioned step is used. Fine calcium oxide also has a large surface area, which results in greater hygroscopicity. In order to avoid such moisture absorption, handling of fine calcium oxide is inferior to that of normal-sized calcium oxide during the production of the resin composition. Therefore, it is preferable to produce the resin composition of the present invention via the aforementioned step. The mixture for the pulverization treatment and the like to be used in the production method of the present invention are described in order below.

A mixture for pulverization treatment can be produced by mixing calcium oxide with a median size exceeding 300 nm, component (B), and an organic solvent. In addition, a mixture for pulverization treatment may also be produced by further mixing an olefin-based polymer having an acid anhydride group and/or a carboxy group as component (A), and component (C). The content of the aforementioned calcium oxide is preferably 3 to 75% by mass, more preferably 5 to 70% by mass, relative to the entire mixture for the pulverization treatment. The content of component (B) is preferably 3 to 40% by mass, more preferably 5 to 35% by mass, relative to the entire mixture for the pulverization treatment. The content of the organic solvent is preferably 20 to 80% by mass, more preferably 30 to 70% by mass, relative to the entire mixture for the pulverization treatment. Components other than those mentioned above (the above-mentioned "other component") may be added to a mixture for the pulverization treatment. The order of addition of respective components is not particularly limited, and the components may be added sequentially or simultaneously.

Examples of the organic solvent to be used in the production method of the present invention include ketones such as acetone, methyl ethyl ketone, cyclohexanone, and the like; acetates such as ethyl acetate, butyl acetate, cellosolve acetate, propylene glycol monomethylether acetate, carbitol acetate, and the like; cellosolves such as cellosolve and the like; carbitols such as butyl carbitol and the like; aromatic hydrocarbons such as toluene, xylene, and the like; amides such as dimethylformamide, dimethylacetamide, N-methylpyrrolidone, and the like; and the like. Commercially available organic solvents, for example, "Swazol" manufactured by Maruzen Petrochemical Co., Ltd., "Ipsol" manufactured by Idemitsu Kosan Co., Ltd., and the like may be used. Only one kind of organic solvent may be used or two or more kinds thereof may be used in combination.

The pulverization treatment can be performed using a known grinder. calcium oxide is pulverized and dispersed in the mixture by the pulverization treatment. Examples of the known grinder include wet bead mill, planetary ball mill, attritor, jet mill, ball mill, vibrating ball mill, and the like. Examples of the bead material include zirconia, alumina, glass, steel, and the like. The bead diameter is, for example, about 0.03 to 5 mm. The rotation speed of the rotating shaft of the bead mill is, for example, about 10 to 10,000 rpm. The flow rate at which the mixture for pulverization treatment is supplied to the pulverization chamber of the bead mill is, for example, about 0.1 to 10,000 kg/hr. In wet pulverization using a bead mill, it is preferable to cool the mixture with chiller water in order to prevent the temperature from rising during the pulverization treatment. The temperature of the chiller water is, for example, about 0 to 40°C.

Furthermore, the mixture after the pulverization treatment may be mixed with any optional components. For example, a liquid olefin-based polymer, a tackifier, and the like may be added and mixed with the mixture after the pulverization treatment. Furthermore, an olefin-based polymer having an acid anhydride group and/or a carboxy group as component (A) may also be mixed with the mixture after the pulverization treatment. Component (A) is preferably mixed with the mixture after the pulverization treatment in order to prevent an increase in the viscosity of the mixture during the pulverization treatment. The order of addition of respective components is not particularly limited, and the components may be added sequentially or simultaneously.

In the varnish of the resin composition containing an organic solvent obtained as described above, a part or all of the organic solvent may be removed by drying and the like. The resin composition of the present invention may be used in a liquid form such as a varnish, or in a solid form such as a film.

[Resin sheet]

The present invention also provides a resin sheet having a laminate structure including a support and a resin composition layer formed from the resin composition of the present invention. In the present invention, a protective sheet may also be used. That is, the resin sheet of the present invention optionally has a laminate structure including a support, a resin composition layer, and a protective sheet in this order. Other layers may be present between the support and the resin composition layer, and between the resin composition layer and the protective sheet. Examples of other layer include an adhesive layer, a release layer, and a resin composition layer formed from a resin composition that does not contain calcium oxide.

The haze of the resin composition layer is preferably less than 60%, more preferably 40% or less, further preferably 30% or less. The lower limit of the haze of the resin composition layer is not particularly limited, and the haze of the resin composition layer is, for example, 0% or more. The haze can be measured according to JIS K 7136.

Examples of the support and the protective sheet include plastic films of polyolefins such as polyethylene, polypropylene, polyvinyl chloride and the like; cycloolefin polymer; polyesters such as poly(ethylene terephthalate) (hereinafter sometimes to be referred to as "PET"), poly(ethylene naphthalate), and the like; polycarbonate; polyimide, and the like. The support and the protective sheet may each be a single layer film or a laminated film.

As the support and protective sheet, for example, a low-moisture-permeable film with a barrier layer, or a laminate film of a low-moisture-permeable film with a barrier layer and another film can be used. Examples of the barrier layer include inorganic films such as silica vapor deposited film, silicon nitride film, silicon oxide film, and the like. The barrier layer may be composed of multiple layers of multiple inorganic films (e.g., silica vapor deposited film). The barrier layer may also be composed of an organic substance and an inorganic substance, or may be a composite multilayer of an organic layer and an inorganic film.

The surface of the protective sheet that comes into contact with the resin composition layer is preferably release-treated. On the other hand, the support may or may not be release-treated. Examples of the release treatment include release treatment with a release agent such as silicone resin-based release agent, alkyd resin-based release agent, fluorine resin-based release agent, and the like.

The thickness of each of the support and the protective sheet is not particularly limited, but is preferably 10 to 150 $\mu$m, more preferably 20 to 100 $\mu$m, from the aspect of handling and the like of the resin sheet. When the support and protective sheet are laminated films, the aforementioned thickness refers to the thickness of the laminated film. On the other hand, the thickness of the resin composition layer is preferably 2 to 100 $\mu$m, more preferably 2 to 75 $\mu$m, further preferably 3 to 50 $\mu$m, from the aspect of transparency, sealing property and adhesiveness.

[Production method of resin sheet]

The resin sheet of the present invention can be produced, for example, by applying a varnish of the resin composition obtained as described above to a support to form a coated film, and then drying the obtained coated film to form a resin composition layer. In addition, a resin sheet having a laminate structure containing a support, a resin composition layer, and a protective sheet in this order can be produced, for example, by applying a varnish to one of the support and the protective sheet and drying same to form a resin composition layer, and then laminating the other of the support and the protective sheet on the formed resin composition layer.

The coated film obtained after removing the organic solvent may be further heated (aged). The temperature of this heating is preferably 80 to 200°C, more preferably 100 to 150°C, and the time thereof is preferably 10 to 240 min, more preferably 30 to 180 min. The heating may be performed under normal pressure or under reduced pressure.

[Electronic device]

The present invention also provides an electronic device containing a resin composition layer formed from the resin composition of the present invention. Examples of the electronic device include organic EL device, organic light emitting diode (OLED), solar cells (in particular, organic solar cells (organic thin-film solar cell (OPV), perovskite solar cell (PSC), dye-sensitized solar cell (DSSC))), sensor device, touch panel having conductive substrate, and the like. The electronic device is preferably an electronic device that is sensitive to moisture, such as organic EL device, organic light emitting diode, solar cell, or the like.

[Example]

While the present invention is explained in more detail in the following by referring to Examples, it is not limited by the following Examples. It is of course possible to modify the present invention as long as it is compatible to the above-mentioned and the below-mentioned gist and practice the present invention, all of which are encompassed in the technical scope of the present invention. Unless otherwise indicated, "parts" and "%" in the amounts of the components and the amounts of the copolymerization units respectively mean "parts by mass" and "% by mass".

<Components>

The components used in the Examples and Comparative Examples are shown below.

Component (A):

· "ER661" (manufactured by SEIKO PMC CORPORATION, maleic anhydride-modified butyl rubber (maleic anhydride-modified isobutylene-isoprene copolymer), acid anhydride group concentration: 0.77 mmol/g, number average molecular weight: 40,000, isobutylene unit/isoprene unit: 98.9%/1.1%)
· "ER645" (manufactured by SEIKO PMC CORPORATION, maleic anhydride-butyl methacrylate random copolymer-modified propylene-butene random copolymer, butyl methacrylate unit concentration: 0.32 mmol/g, acid anhydride group concentration: 1.18 mmol/g, number average molecular weight: 59,000, propylene unit/butene unit: 71%/29%) (non-volatile content: 20%)

Component (B):

· "HV-300M" (manufactured by TOHO CHEMICAL INDUSTRY COMPANY, LIMITED): maleic anhydride-modified liquid polybutene, half acid value 33 KOHmg/g, number average molecular weight 2,100
· "HV-100M" (manufactured by TOHO CHEMICAL INDUSTRY COMPANY, LIMITED): maleic anhydride-modified liquid polybutene, half acid value 41 KOHmg/g, number average molecular weight 1,220

Component (C):

· "B10" (manufactured by BASF: polyisobutylene, number average molecular weight: 30,000)
· "N50SF" (manufactured by BASF: polyisobutylene, number average molecular weight: 300,000)
· "N80SF" (manufactured by BASF: polyisobutylene, number average molecular weight: 600,000)
· "BUTYL065" (manufactured by JSR, butyl rubber, number average molecular weight: 200,000, isobutylene unit/isoprene unit: 98.7%/1.3%)
· "SIBSTAR103T-UL" (manufactured by KANEKA CORPORATION, styrene-isobutylene-styrene block copolymer (SIBS), number average molecular weight: 100,000, styrene unit/isobutylene unit: 30%/70%)

Component (D):

· calcium oxide (manufactured by Yoshizawa Lime Industry Co., Ltd., median size: 2.1 μm)

Component (E):

"HV-1900" (manufactured by ENEOS, liquid polybutene, number average molecular weight: 2,900, viscosity at 25°C: 460 Pa·s)

Component (F):

· "ARKON P-125" (manufactured by Arakawa Chemical Industries, Ltd., hydrogenated petroleum resin, softening point: 125°C)

Component (G):

· "Irganox 1010" (manufactured by BASF): hindered phenol antioxidant

Component (H):

· 2,4,6-tris(dimethylaminomethyl)phenol (hereinafter to be abbreviated as "TAP") (manufactured by Kayaku Akzo Co., Ltd.): tertiary amine curing accelerator

<Example 1>

A varnish with a mixing ratio shown in the following Table was produced by the following steps, and a resin sheet was produced using the obtained varnish. The amount (part) of each component listed in the following Table indicates the non-volatile content of each component in the varnish. In the following Table, calcium oxide is indicated as "CaO" and the median size thereof is indicated in the parenthesis.

Specifically, maleic anhydride-modified liquid polybutene ("HV-300M" manufactured by TOHO CHEMICAL INDUSTRY COMPANY, LIMITED), calcium oxide (manufactured by Yoshizawa Lime Industry Co., Ltd.), and toluene were blended to obtain a mixture for a pulverization treatment (content of toluene: 38%, content of maleic anhydride-modified liquid polybutene: 11%, content of calcium oxide: 51%, relative to the entire mixture).

The mixture for a pulverization treatment was placed in a wet bead mill (LABSTAR Mini "LMZ015" manufactured by Ashizawa Finetech Ltd.), and beads (bead diameter: 0.1 mm) were filled to about 60% by volume of the effective volume of the pulverization chamber. A pulverization treatment was performed to obtain a mixture after pulverization treatment, in which calcium oxide was pulverized and dispersed.

A small amount was taken from the mixture after a pulverization treatment and diluted 100 times with toluene to prepare a measurement sample, and the median size of calcium oxide was measured and calculated by dynamic light scattering using a nanoparticle size analyzer "NANOTRAC WAVE" manufactured by MICROTRAC. As a result, the median size of calcium oxide was 180 nm.

The mixture after a pulverization treatment was blended with a Swazol solution (non-volatile content: 60%) of a tackifier ("ARKON P-125" manufactured by Arakawa Chemical Industries, Ltd.), polyisobutylene ("B10" manufactured by BASF), maleic anhydride-butyl methacrylate random copolymer-modified butyl rubber ("ER661" manufactured by SEIKO PMC CORPORATION), a hindered phenol antioxidant ("Irganox 1010" manufactured by BASF), and a curing accelerator (TAP, manufactured by Kayaku Nouryon Corporation), and the obtained mixture was mixed in a high-speed rotary mixer to give a resin composition varnish.

A poly(ethylene terephthalate) film ("SP4020", manufactured by TOYO CLOTH CO., LTD., PET film thickness: 38 μm) with one surface treated with a silicone-based release agent was adhered to a low-moisture permeable poly(ethylene terephthalate) film ("TECHBARRIER HX" manufactured by Mitsubishi Chemical Corporation, PET film thickness: 12 μm) such that the surface of SP4020 not treated with a silicone-based release agent came into contact with the TECHBARRIER HX to produce a laminated film, and this was used as a support for the resin sheet. In the following, "the surface of the laminated film treated with a silicone-based release agent" is referred to as the "release-treated surface".

The obtained varnish was uniformly applied with a die coater to the release-treated surface of a laminated film, and heated at 150°C for 10 min to give a resin sheet having a 10 $\mu$m-thick resin composition layer.

<Example 2>

By a method similar to that in Example 1 except that polyisobutylene ("B10" manufactured by BASF) was changed to polyisobutylene ("N50SF" manufactured by BASF), a resin sheet having a 10 $\mu$m-thick resin composition layer was produced.

<Example 3>

By a method similar to that in Example 1 except that polyisobutylene ("B10" manufactured by BASF) was changed to polyisobutylene ("N80SF" manufactured by BASF), a resin sheet having a 10 $\mu$m-thick resin composition layer was produced.

<Example 4>

By a method similar to that in Example 1 except that polyisobutylene ("B10" manufactured by BASF) was changed to butyl rubber ("BUTYL065" manufactured by JSR), a resin sheet having a 10 $\mu$m-thick resin composition layer was produced.

<Example 5>

By a method similar to that in Example 1 except that polyisobutylene ("B10" manufactured by BASF) was changed to styrene-isobutylene-styrene block copolymer ("SIBSTAR103T-UL" manufactured by KANEKA CORPORATION), a resin sheet having a 10 $\mu$m-thick resin composition layer was produced.

<Example 6>

By a method similar to that in Example 1 except that maleic anhydride-modified liquid polybutene ("HV-300M" manufactured by TOHO CHEMICAL INDUSTRY COMPANY, LIMITED) was changed to maleic anhydride-modified liquid polybutene ("HV-100M" manufactured by TOHO CHEMICAL INDUSTRY COMPANY, LIMITED), a resin sheet having a 10 $\mu$m-thick resin composition layer was produced.

<Example 7>

By a method similar to that in Example 6 except that maleic anhydride-butyl methacrylate random copolymer-modified butyl rubber ("ER661" manufactured by SEIKO PMC CORPORATION) was changed to glycidyl methacrylate-modified propylene-butene random copolymer ("ER645" manufactured by SEIKO PMC CORPORATION), a resin sheet having a 10 $\mu$m-thick resin composition layer was produced.

<Example 8>

By a method similar to that in Example 1 except that the amount of maleic anhydride-butyl methacrylate random copolymer-modified butyl rubber ("ER661" manufactured by SEIKO PMC CORPORATION) was changed from 20 parts to 10 parts, a resin sheet having a 10 $\mu$m-thick resin composition layer was produced.

<Example 9>

By a method similar to that in Example 1 except that the amount of maleic anhydride-butyl methacrylate random copolymer-modified butyl rubber ("ER661" manufactured by SEIKO PMC CORPORATION) was changed from 20 parts to 30 parts, a resin sheet having a 10 $\mu$m-thick resin composition layer was produced.

<Example 10>

By a method similar to that in Example 1 except that the amount of polyisobutylene ("B10" manufactured by BASF) was changed from 45 parts to 22.5 parts and the amount of liquid polybutene ("HV-1900" manufactured by ENEOS) was changed from 45 parts to 22.5 parts, a resin sheet having a 10 μm-thick resin composition layer was produced.

<Example 11>

By a method similar to that in Example 1 except that the amount of polyisobutylene ("B10" manufactured by BASF) was changed from 45 parts to 30 parts, a resin sheet having a 10 μm-thick resin composition layer was produced.

<Example 12>

By a method similar to that in Example 1 except that the amount of polyisobutylene ("B10" manufactured by BASF) was changed from 45 parts to 60 parts, a resin sheet having a 10 μm-thick resin composition layer was produced.

<Comparative Example 1>

By a method similar to that in Example 1 except that polyisobutylene ("B10" manufactured by BASF) was changed to liquid polybutene ("HV-1900" manufactured by ENEOS), a resin sheet having a 10 μm-thick resin composition layer was produced.

<Comparative Example 2>

By a method similar to that in Example 1 except that the formulation was changed to exclude calcium oxide (manufactured by Yoshizawa Lime Industry Co., Ltd.), a resin sheet having a 10 μm-thick resin composition layer was produced.

<Comparative Example 3>

By a method similar to that in Example 1 except that the formulation was changed to exclude maleic anhydride-modified liquid polybutene ("HV-300M" manufactured by TOHO CHEMICAL INDUSTRY COMPANY, LIMITED), a resin sheet having a 10 μm-thick resin composition layer was produced.

<Comparative Example 4>

By a method similar to that in Example 1 except that the step was changed to exclude pulverization treatment of calcium oxide (manufactured by Yoshizawa Lime Industry Co., Ltd.), a resin sheet having a 10 μm-thick resin composition layer was produced.

<Comparative Example 5>

By a method similar to that in Example 1 except that the formulation was changed to exclude maleic anhydride-butyl methacrylate random copolymer-modified butyl rubber ("ER661" manufactured by SEIKO PMC CORPORATION), a resin sheet having a 10 μm-thick resin composition layer was produced.

<Comparative Example 6>

By a method similar to that in Example 1 except that the formulation was changed to exclude polyisobutylene ("B10" manufactured by BASF), a resin sheet having a 10 μm-thick resin composition layer was produced.

<Comparative Example 7>

By a method similar to that in Example 1 except that the maleic anhydride-butyl methacrylate random copolymer-modified butyl rubber ("ER661" manufactured by SEIKO PMC CORPORATION) was excluded and the amount of polyisobutylene ("B10" manufactured by BASF) was changed from 45 parts to 65 parts, a resin sheet having a 10 μm-thick resin composition layer was produced.

The resin composition layer of each resin sheet obtained in Examples and Comparative Examples was evaluated by the following method.

<Evaluation method of total light transmittance and b*>

The resin sheets produced in Examples and Comparative Examples were cut to a length 50 mm and a width 20 mm. The resin composition layer of a cut resin sheet was laminated onto a glass plate (76 mm long, 26 mm wide, and 1.2 mm thick microslide glass (MICRO SLIDE GLASS S1112 manufactured by Matsunami Glass Ind., Ltd., polished edge No. 2) using a batch-type vacuum laminator (manufactured by Nichigo Morton Co., Ltd., V-160). The lamination conditions were temperature 80°C, depressurization time 30 seconds, followed by pressurization at 0.3 MPa for 30 seconds. Thereafter, the PET film on the resin sheet was peeled off, and the light transmittance spectrum of the exposed cured resin composition layer was measured using a fiber spectrophotometer (MCPD-7700, Model 311C, manufactured by Otsuka Electronics Co., Ltd., external light source unit: halogen lamp MC-2564 (24V, 150W specification)) equipped with an $\varphi$80 mm integrating sphere (model SRS-99-010, reflectance 99%). The total light transmittance (%) and b* at a wavelength of 450 nm were calculated and evaluated according to the following criteria. The distance between the integrating sphere and the sample (laminate) was set to 0 mm, and air was used as a reference. The results are shown in the following Table.

· total light transmittance

　　Good (○): 90% or more
　　Poor (×): less than 90%

· b*

　　Good (O): less than 3%
　　Poor (×): 3% or more

<Evaluation method of water vapor penetration barrier property>

A composite film "PET TSUKI AL1N30" (aluminum foil thickness 30 $\mu$m, poly(ethylene terephthalate) film thickness 25 $\mu$m, manufactured by Toyo Tokai Aluminium Hanbai K.K.) provided with aluminum foil and poly(ethylene terephthalate) film was prepared as a support film. In the same manner as in the production methods of resin sheets in each Example and Comparative Example except that this support film was used instead of a support, a resin composition layer was formed on the aluminum foil side of the support film. As a result, a test sheet provided with a support film and a resin composition layer was obtained.

A 50 mm x 50 mm glass plate made of alkali-free glass was prepared. This glass plate was washed with boiling isopropyl alcohol for 5 min and dried at 150°C for 30 min or longer.

Calcium was vapor-deposited onto one side of this glass plate using a mask that covered the peripheral area 0 mm to 2 mm from the end part of the glass plate. As a result, a 200 nm-thick calcium film (99.8% purity) was formed in the central portion of one side of the glass plate, excluding the peripheral area 0 mm to 2 mm from the end part of the aforementioned glass plate.

In a nitrogen atmosphere, the resin composition layer of the aforementioned test sheet and the calcium film side of the aforementioned glass plate were bonded together using a thermal laminator (Lamipacker DAiSY A4(LPD2325) manufactured by FUJIPLA) to obtain a laminate. This laminate was used as the evaluation sample.

Generally, when calcium contacts water and becomes calcium oxide, it becomes transparent. In the aforementioned evaluation sample, the glass plate and aluminum foil have sufficiently high water vapor penetration barrier property. Therefore, moisture generally moves in the in-plane direction (direction perpendicular to thickness direction) through the end part of the resin composition layer to reach the calcium film. When moisture penetrates into the evaluation sample, the calcium film gradually oxidizes from the end part and becomes transparent, and shrinkage of the calcium film is observed. Therefore, penetration of moisture into the evaluation sample can be evaluated by measuring the sealing distance [mm] from the end part of the evaluation sample to the calcium film. Thus, an evaluation sample containing a calcium film can be used as a model electronic device containing lead.

A sealing distance X2 [mm] from the end part of the evaluation sample to the end part of the calcium film was measured using a microscope (Measuring Microscope MF-U, manufactured by Mitutoyo Corporation). Hereinafter this sealing distance X2 is sometimes to be referred to as the initial sealing distance X2.

Then, the evaluation sample was stored in a constant temperature and humidity chamber set to temperature 85°C, humidity 85%RH. When the sealing distance X1 (mm) between the end part of the evaluation sample stored in the constant temperature and humidity chamber and the end part of the calcium film increased by 0.1 mm from the initial sealing distance X2, the evaluation sample was removed from the constant temperature and humidity chamber. The time from when the evaluation sample was stored in the constant temperature and humidity chamber to when it was removed from the constant temperature and humidity chamber was calculated as the decrease start time t [hours]. This decrease start time t corresponds to the time from time $T_{P1}$ when the evaluation sample is stored in the constant temperature and humidity chamber to time $T_{P2}$ when the sealing distance X1 [mm] between the end part of the evaluation sample stored in the constant temperature and humidity chamber and the end part of the calcium film becomes "X2+0.1 mm".

The aforementioned sealing distance X1 and decrease start time t were applied to Fick's diffusion equation of the formula (1) to calculate the constant K as a water vapor penetration barrier property parameter.
[Math. 1]

$$X1 = K\sqrt{t} \qquad (1)$$

The obtained constant K was used to evaluate the water vapor penetration barrier property as the ability of the resin composition layer to suppress moisture penetration, according to the following criteria. Smaller constant K values mean higher water vapor penetration barrier property. The results are shown in the following Table. In the following Table, "(cm/hr^0.5)" means "(cm/hr$^{0.5}$)".

(Criteria of water vapor penetration barrier property)

Good (○): constant K of less than 0.025 cm/hr$^{0.5}$
Poor (×): constant K of 0.025 cm/hr$^{0.5}$ or more

<Evaluation method of adhesiveness>

A resin composition layer of a resin sheet (50 mm long, 20 mm wide) using a PET film as a support was laminated to the aluminum foil side of a composite film "PET TSUKI AL1N30" (aluminum foil thickness 30 $\mu$m, poly(ethylene terephthalate) film thickness 25 $\mu$m, manufactured by Toyo Tokai Aluminium Hanbai K.K.) provided with aluminum foil and a poly(ethylene terephthalate) film by using a batch-type vacuum laminator (manufactured by Nichigo Morton Co., Ltd., Morton-724). Lamination was performed under the conditions of temperature 80°C, time 30 seconds, pressure 0.3 MPa. The PET film was peeled off, and a glass plate (76 mm long, 26 mm wide, 1.2 mm thick, microslide glass) was further laminated on the exposed resin composition layer under the same conditions as above. The adhesive strength (kgf/cm) of the obtained laminate was measured when it was peeled off at a 90-degree angle to the length direction of the aluminum foil at a pulling rate of 50 mm/min.

The laminate was also stored in a constant temperature and humidity chamber set to temperature 85°C, humidity 85%RH for 100 hr, and the adhesive strength retention rate was calculated. The results are shown in the following Table.

Good (○): retention rate of 70% or more
Poor (×): retention rate of less than 70%

[Table 1]

| | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Comp. Ex. 1 | Comp. Ex. 2 | Comp. Ex. 3 | Comp. Ex. 4 | Comp. Ex. 5 | Comp. Ex. 6 | Comp. Ex. 7 |
|---|---|---|---|---|---|---|---|---|---|---|---|---|---|---|---|---|---|---|---|---|
| component (A) | ER661 | 20 | 20 | 20 | 20 | 20 | 20 | | 10 | 30 | 20 | 20 | 20 | 20 | 20 | 20 | 20 | | 65 | |
| | ER645 | | | | | | | 20 | | | | | | | | | | | | |
| component (B) | HV-300M | 25 | 25 | 25 | 25 | 25 | | | 25 | 25 | 25 | 25 | 25 | 25 | 25 | | 25 | 25 | 25 | 25 |
| | HV-100M | | | | | | 25 | 25 | | | | | | | | | | | | |
| component (C) | B10 | 45 | | | | | 45 | 45 | 45 | 45 | 22.5 | 30 | 60 | | 45 | 45 | 45 | 45 | | 65 |
| | N50SF | | 45 | | | | | | | | | | | | | | | | | |
| | N80SF | | | 45 | | | | | | | | | | | | | | | | |
| | BUTYL065 | | | | 45 | | | | | | | | | | | | | | | |
| | SIBSTAR103T-UL | | | | | 45 | | | | | | | | | | | | | | |
| component (D) | CaO (D50:180 nm) | 90 | 90 | 90 | 90 | 90 | 90 | 90 | 90 | 90 | 90 | 90 | 90 | 90 | | 90 | | 90 | 90 | 90 |
| | CaO (D50:2.1 μm) | | | | | | | | | | | | | | | | 90 | | | |
| component (E) | HV-1900 | | | | | | | | | | 22.5 | | 45 | | | | | | | |
| component (F) | ARKON P-125 | 45 | 45 | 45 | 45 | 45 | 45 | 45 | 45 | 45 | 45 | 45 | 45 | 45 | 45 | 45 | 45 | 45 | 45 | 45 |
| component (G) | Irganox 1010 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| component (H) | TAP | 0.02 | 0.02 | 0.02 | 0.02 | 0.02 | 0.02 | 0.02 | 0.02 | 0.02 | 0.02 | 0.02 | 0.02 | 0.02 | 0.02 | 0.02 | 0.02 | 0.02 | 0.02 | 0.02 |
| resin composition layer thickness [μm] | | 10 | 10 | 10 | 10 | 10 | 10 | 10 | 10 | 10 | 10 | 10 | 10 | 10 | 10 | 10 | 10 | 10 | 10 | 10 |
| transparency | total light transmittance (%) | 90 | 90 | 90 | 90 | 91 | 90 | 90 | 90 | 90 | 90 | 90 | 90 | 85 | >90 | not dispersible | <50 | 90 | 87 | 89 |
| | evaluation | O | O | O | O | O | O | O | O | O | O | O | O | × | × | × | × | O | × | O |
| | b* (%) | 1.8 | 1.8 | 1.7 | 2.1 | 1.8 | 1.8 | 2.0 | 1.9 | 1.3 | 1.8 | 1.8 | 2.3 | 3.3 | <1 | not dispersible | >15 | 1.8 | 4 | 2.3 |
| | evaluation | O | O | O | O | O | O | O | O | O | O | O | O | × | O | × | × | O | O | O |
| adhesiveness | adhesive strength (kgf/cm) | 0.35 | 0.4 | 0.4 | 0.26 | 0.28 | 0.4 | 0.4 | 0.39 | 0.33 | 0.38 | 0.32 | 0.44 | 0.54 | 0.4 | film not formable | 0.4 | 0.5 | 0.39 | 0.38 |
| | adhesive strength retention rate (%) | 110% | 113% | 105% | 100% | 111% | 100% | 105% | 105% | 124% | 103% | 103% | 116% | 74% | 100% | film not formable | 100% | 64% | 121% | 127% |
| | evaluation | O | O | O | O | O | O | O | O | O | O | O | O | O | O | × | O | × | O | O |
| water vapor penetration barrier property | K (cm/hr^0.5) | 0.01 | 0.02 | 0.02 | 0.01 | 0.02 | 0.02 | 0.02 | 0.02 | 0.02 | 0.02 | 0.02 | 0.02 | 0.02 | >0.04 | film not formable | <0.01 | 0.03 | 0.01 | 0.02 |
| | evaluation | O | O | O | O | O | O | O | O | O | O | O | O | O | × | × | O | × | O | O |

From the results of Table 1, it was found that the resin compositions of the Examples of the present invention have good evaluations of total light transmittance and b* (i.e., superior in transparency), and can form resin composition layer superior in water vapor penetration barrier property.

[Industrial Applicability]

The resin composition of the present invention can form a resin composition layer that has simultaneously achieved both water vapor penetration barrier property and transparency. Therefore, it is useful as a sealing material for, for example, electronic devices (e.g., organic EL device, organic light emitting diode (OLED), solar cells (in particular, organic solar cells (organic thin-film solar cell (OPV), perovskite solar cell (PSC), dye-sensitized solar cell (DSSC))), sensor device, touch panel having conductive substrate, etc.).

This application is based on patent application No. 2023-033083 filed in Japan, the contents of which are encompassed in full herein.

**Claims**

**1.** A resin composition comprising the following component (A) to component (D) :

(A) a polymer having an acid anhydride group and/or a carboxy group, and a number average molecular weight of 10,000 or more,

(B) a polymer having an acid anhydride group and/or a carboxy group, and a number average molecular weight of less than 10,000,

(C) an isobutylene-containing polymer having a number average molecular weight of 10,000 or more, and

(D) calcium oxide having a median size of 300 nm or less.

2. The resin composition according to claim 1, wherein

the (A) polymer having an acid anhydride group and/or a carboxy group, and a number average molecular weight of 10,000 or more is an olefin-based polymer having an acid anhydride group and/or a carboxy group, and a number average molecular weight of 10,000 or more.

3. The resin composition according to claim 1, wherein

the (B) polymer having an acid anhydride group and/or a carboxy group, and a number average molecular weight of less than 10,000 is an olefin-based polymer having an acid anhydride group and/or a carboxy group, and a number average molecular weight of less than 10,000.

4. The resin composition according to claim 1, wherein the number average molecular weight of the component (B) is less than 3,000.

5. The resin composition according to claim 1, wherein the (C) isobutylene-containing polymer having a number average molecular weight of 10,000 or more is an isobutylene-containing olefin-based polymer having a number average molecular weight of 10,000 or more.

6. The resin composition according to claim 5, wherein the (C) isobutylene-containing polymer having a number average molecular weight of 10,000 or more is at least one selected from the group consisting of polyisobutylene, an isobutylene-isoprene copolymer, and a styrene-isobutylene-styrene block copolymer, each having a number average molecular weight of 10,000 or more.

7. The resin composition according to claim 1, further comprising (E) a liquid olefin-based polymer (excluding component (A), component (B), and component (C)).

8. The resin composition according to claim 1, further comprising (F) a tackifier.

9. The resin composition according to claim 1, wherein a content of the component (A) is 0.1 to 25% by mass relative to 100% by mass of a non-volatile content of the resin composition.

10. The resin composition according to claim 1, wherein the content of the component (B) is 3 to 50% by mass relative to 100% by mass of the non-volatile content of the resin composition.

11. The resin composition according to claim 1, wherein the content of the component (C) is 5 to 30% by mass relative to 100% by mass of the non-volatile content of the resin composition.

12. The resin composition according to claim 1, wherein the content of the component (D) is 10 to 70% by mass relative to 100% by mass of the non-volatile content of the resin composition.

13. A resin sheet having a laminate structure including a resin composition layer formed from the resin composition according to claim 1.

## INTERNATIONAL SEARCH REPORT

| International application No. |
|---|
| **PCT/JP2024/007778** |

| A. | CLASSIFICATION OF SUBJECT MATTER |
|---|---|

*C08L 23/22*(2006.01)i; *C08K 3/22*(2006.01)i; *C08L 23/26*(2006.01)i; *C08L 53/00*(2006.01)i
FI:    C08L23/22; C08L53/00; C08L23/26; C08K3/22

According to International Patent Classification (IPC) or to both national classification and IPC

| B. | FIELDS SEARCHED |
|---|---|

Minimum documentation searched (classification system followed by classification symbols)

C08L23/22; C08K3/22; C08L23/26; C08L53/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2022-183745 A (AJINOMOTO CO., INC.) 13 December 2022 (2022-12-13)<br>claims, examples, paragraphs [0007], [0019], [0022], [0027], [0037], [0046]-[0047], [0065]-[0066], [0124] | 1-5, 7-13 |
| A | | 6 |
| Y | JP 2023-8941 A (AJINOMOTO CO., INC.) 19 January 2023 (2023-01-19)<br>claims, examples, comparative examples, paragraphs [0001], [0007], [0052]-[0053] | 1-5, 7-13 |
| A | | 6 |
| A | JP 2018-162418 A (AJINOMOTO CO., INC.) 18 October 2018 (2018-10-18)<br>claims, examples | 1-13 |
| A | JP 2017-513205 A (LG CHEM, LTD.) 25 May 2017 (2017-05-25)<br>claims, examples | 1-13 |
| A | JP 2015-502868 A (LG CHEM, LTD.) 29 January 2015 (2015-01-29)<br>claims, examples | 1-13 |

☑ Further documents are listed in the continuation of Box C.        ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **30 April 2024** | **14 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
| :--- |
| **PCT/JP2024/007778** |

| C. | DOCUMENTS CONSIDERED TO BE RELEVANT | |
| :---: | :--- | :---: |
| Category* | Citation of document, with indication, where appropriate, of the relevant passages | Relevant to claim No. |
| P, X | JP 2023-106860 A (AJINOMOTO CO., INC.) 02 August 2023 (2023-08-02)<br>claims, examples, paragraphs [0021], [0029], [0040], [0047], [0048], [0051] | 1-13 |

Form PCT/ISA/210 (second sheet) (July 2022)

## INTERNATIONAL SEARCH REPORT
### Information on patent family members

International application No.

**PCT/JP2024/007778**

| Patent document cited in search report | | | Publication date (day/month/year) | Patent family member(s) | | | Publication date (day/month/year) |
|---|---|---|---|---|---|---|---|
| JP | 2022-183745 | A | 13 December 2022 | CN | 115477906 | A | |
| | | | | KR | 10-2022-0162637 | A | |
| JP | 2023-8941 | A | 19 January 2023 | CN | 115558212 | A | |
| | | | | KR | 10-2023-0005780 | A | |
| JP | 2018-162418 | A | 18 October 2018 | (Family: none) | | | |
| JP | 2017-513205 | A | 25 May 2017 | US | 2017/0222183 | A1 | |
| | | | | claims, examples | | | |
| | | | | EP | 3125328 | A1 | |
| | | | | KR | 10-2015-0112892 | A | |
| | | | | CN | 106415875 | A | |
| JP | 2015-502868 | A | 29 January 2015 | US | 2014/0217621 | A1 | |
| | | | | claims, examples | | | |
| | | | | JP | 2015-505422 | A | |
| | | | | JP | 2015-509864 | A | |
| | | | | JP | 2015-512138 | A | |
| | | | | JP | 2016-128253 | A | |
| | | | | US | 2014/0318707 | A1 | |
| | | | | US | 2014/0319999 | A1 | |
| | | | | US | 2015/0188085 | A1 | |
| | | | | EP | 2781570 | A1 | |
| | | | | EP | 2781571 | A1 | |
| | | | | EP | 2783849 | A1 | |
| | | | | EP | 2801476 | A1 | |
| | | | | KR | 10-2013-0081262 | A | |
| | | | | KR | 10-2013-0081261 | A | |
| | | | | KR | 10-2013-0081263 | A | |
| | | | | KR | 10-2013-0081264 | A | |
| | | | | CN | 103998238 | A | |
| | | | | CN | 103998239 | A | |
| | | | | CN | 104024360 | A | |
| | | | | CN | 104039910 | A | |
| JP | 2023-106860 | A | 02 August 2023 | CN | 116478494 | A | |
| | | | | KR | 10-2023-0113169 | A | |

Form PCT/ISA/210 (patent family annex) (July 2022)

**REFERENCES CITED IN THE DESCRIPTION**

**Patent documents cited in the description**

- WO 2017057708 A
- JP 2023033083 A